# EUROPÄISCHE PATENTSCHRIFT

(11) **EP 2 758 686 B1**
(45) Veröffentlichungstag und Bekanntmachung des Hinweises auf die Patenterteilung: **16.12.2015**
(21) Anmeldenummer: 12772061.3
(22) Anmeldetag: 22.08.2012
(51) Int. Cl.: F16D 13/75

(54) **REIBUNGSKUPPLUNG MIT WEGGESTEUERTER VERSCHLEIFTKOMPENSATION**
FRICTION CLUTCH WITH WEAR COMPENSATION DEVICE WORKING WITH WEAR DISTANCE
EMBRAYAGE À FRICTION AVEC DISPOSITIF DE RATTRAPPAGE DE JEU COMMANDÉ PAR L'ÉCART D'USURE

(30) Priorität: 21.09.2011 DE 102011083108
(43) Veröffentlichungstag der Anmeldung: 30.07.2014
(73) Patentinhaber: Schaeffler Technologies AG & Co. KG, 91074 Herzogenaurach (DE)
(72) Erfinder: SCHNEIDER, Michael, 76534 Baden-Baden (DE); GÜTLE, Martin, 77654 Offenburg-Windschläg (DE); AHNERT, Gerd, 77880 Sasbach (DE)
(86) Internationale Anmeldenummer: PCT/DE2012/000853
(87) Internationale Veröffentlichungsnummer: WO 2013/041072

(56) Entgegenhaltungen:
- EP-A1- 2 218 931
- DE-A1-102008 051 100
- DE-A1-102010 051 254
- DE-A1-102010 054 300

## Beschreibung

Die vorliegende Erfindung betrifft eine Reibungskupplung mit einer weggesteuerten Verschleißkompensation gemäß den Merkmalen des Anspruchs 1.

Eine gattungsgemäße Reibungskupplung ist beispielsweise aus der DE 10 2008 051 100 A1 bekannt. Eine Verschleißkompensation des über die Lebensdauer der Reibungskupplung auftretenden Verschleißes der Reibbeläge in derartigen Reibungskupplungen wird bewirkt, indem zwischen der Anpressplatte und dem diese beaufschlagenden Hebelsystem ein Verstellring angeordnet wird, der in Umfangsrichtung angeordnete Rampen aufweist, die mit auf der Anpressplatte angeordneten Gegenrampen bei Verdrehung des Verstellrings den durch die axial abgetragenen Reibbeläge verursachten verringerten Abstand zwischen Gegendruckplatte und Anpressplatte und damit zwischen Gegendruckplatte und Hebelsystem ausgleicht. Auf diese Weise kann über die Lebensdauer der Reibungskupplung ein im Wesentlichen konstanter Anstellwinkel des Hebelsystems, beispielsweise einer Hebelfeder oder Tellerfeder, zum Gehäuse mit damit verbundenen konstanten Betätigungskräften der Reibungskupplung erzielt werden, wobei jedoch die Genauigkeit der Verschleißnachstellung mit zunehmender Lebensdauer der Reibungskupplung ungenauer werden kann.

Es ist ferner bekannt, ein radial außerhalb des Hebelsystems angeordnetes und sich an einem radial außerhalb des Verstellrings angeordneten und mit dem Verstellring verbundenen Axialanschlag abstützendes Abstandsblech vorzusehen. Dieses weist eine definierte Profilierung auf, mit der das antriebsklinkenseitige Abstandsblech zur betriebspunktvariablen Begrenzung des Relativwegs zwischen der Antriebsklinke und dem Antriebsritzel in Anlage kommt, wobei jedoch der Bauraum in radialer Richtung der Reibungskupplung zwischen der radial innenliegenden Oberfläche der Antriebsklinke und dem radial äußeren Rand des Hebelsystems beziehungsweise des Verstellrings begrenzt ist.

Es ist daher die Aufgabe der vorliegenden Erfindung, eine Reibungskupplung mit einer Verschleißnachstelleinrichtung bereitzustellen, welche eine Verbesserung der Genauigkeit der Verschleißnachstellung ermöglicht und dabei den benötigten Bauraum minimiert.

Die Lösung der Aufgabe erfolgt erfindungsgemäß durch eine Reibungskupplung mit den Merkmalen des Anspruchs 1. Bevorzugte Ausgestaltungen der Erfindung sind in den Unteransprüchen angegeben.

Bei einer erfindungsgemäßen Reibungskupplung mit einem Gehäuse mit einer drehfest und axial begrenzt zu diesem verlagerbar angeordneten Anpressplatte, die von einem sich an dem Gehäuse abstützenden Hebelsystem gegenüber einer gehäusefest angeordneten Gegendruckplatte unter Verspannung von Reibbelägen einer Kupplungsscheibe axial verlagerbar ist, wobei bei Unterschreiten eines bei verspannten Reibbelägen gebildeten Abstands zwischen Anpressplatte und Gegendruckplatte ein Formschluss zwischen einem mit einer Spindel eines an der Anpressplatte angeordneten Spindeltriebs zum Drehantrieb eines zwischen Anpressplatte und Hebelsystem angeordneten Verstellrings verbundenen Ritzel und einer an dem Gehäuse elastisch unter Vorspannung in Richtung Anpressplatte befestigten Antriebsklinke gebildet wird und während einer Betätigungsbewegung der Anpressplatte gegenüber dem Gehäuse nach einem Verdrehen des Ritzels mittels der Antriebsklinke gelöst wird, wobei ein Axialweg der Antriebsklinke gegenüber dem Ritzel mittels des Verstellrings mit einer Kontaktfläche und eines gehäuseseitig angeordneten Abstandshalters begrenzt ist, wobei die Kontaktfläche über einen im Wesentlichen axialen Verstellweg des Verstellringes durch den Abstandshalter kontaktierbar ist, verläuft der Abstandshalter erfindungsgemäß durch eine als Durchgang ausgestaltete Aussparung des Hebelsystems zu einer Anlage an der Kontaktfläche, wobei die Kontaktfläche als Boden einer, in einer der Anpressplatte entgegengesetzt angeordneten Oberfläche des Verstellrings angeordneten, als Bodenvertiefung ausgestaltete Aussparung ausgebildet ist.

Die Verdrehung des Verstellrings erfolgt mittels eines im Verschleißfall gebildeten Formschlusses zwischen einer gehäusefest angeordneten Antriebsklinke und einem an der Anpressplatte aufgenommenen Spindeltrieb, wobei an dessen Spindel ein Ritzel angeordnet ist, auf dessen Außenprofil die Antriebsklinke im Normalzustand der Reibungskupplung während der Betätigungsvorgänge, die eine axiale Verlagerung der Anpressplatte zwischen einem geöffneten Zustand, bei dem die Reibbeläge der Kupplungsscheibe nicht in Eingriff zwischen Gegendruckplatte und Anpressplatte stehen, und einem geschlossenen Zustand, bei dem die Reibbeläge zwischen Gegendruckplatte und Anpressplatte axial verspannt sind und einen Reibeingriff mit diesen zur Übertragung des an der Reibungskupplung anstehenden Moments bilden, der Reibungskupplung bewirken. Mit zunehmendem Verschleiß der Reibbeläge verringert sich der Abstand wie Verschleißabstand zwischen Anpressplatte und Gegendruckplatte und erhöht sich der Relativweg zwischen Gehäuse und Anpressplatte, so dass bei Überschreiten eines vorgegebenen Relativweges während eines Betätigungsweges der Reibungskupplung mit sich in Richtung Gegendruckplatte bewegender Anpressplatte die Antriebsklinke formschlüssig in das Außenprofil des Ritzels einrastet und bei einer Rückbewegung der Anpressplatte das Ritzel um einen vorgegebenen Betrag verdreht. Hierdurch wird nach der folgenden kinematischen Kette die Spindel des Spindeltriebs verdreht und die auf der Spindel drehfest angeordnete und in den Verstellring radial eingreifende Spindelmutter längs der Spindel verlagert, so dass der Verstellring um einen vorgegebenen Betrag verdreht wird und dadurch der ursprüngliche Abstand zwischen Hebelsystem und Gegendruckplatte wieder hergestellt wird. Bei der Rückbewegung bewegt sich im Weiteren die Antriebsklinke wieder aus dem Außenprofil und gleitet auf diesem solange, bis der nächste Verschleißabstand erreicht ist.

Die Antriebsklinke kann axial zwischen dem Hebelsystem und dem Gehäuse aufgenommen sein. Um eine Beschädigung der Antriebsklinke insbesondere bei klemmendem Ritzel zu vermeiden, ist die Antriebsklinke axial elastisch in Richtung des Gehäuses verlagerbar, wobei die Steifigkeit der Antriebsklinke so ausgelegt ist, dass die Kraft zur axial elastischen Verlagerung der Antriebsklinke gegen die Bewegung der Anpressplatte zur Verdrehung des Ritzels größer als die bei einem gewöhnlichen Nachstellprozess von der Antriebsklinke zur Verdrehung des Ritzels aufzuwendenden Kraft ist. Um das Ausweichen der Antriebsklinke bei klemmendem Ritzel zu ermöglichen, kann im Gehäuse ein entsprechender axialer Bauraum vorgehalten werden. Hierfür ist ein Freiraum für die Antriebsklinke im Bereich zwischen Hebelsystem, wie etwa Tellerfeder, und Gehäuse vorgesehen.

Durch die Anordnung der Kontaktfläche für den Abstandshalter und, durch eine vorteilhafte Befestigung des Abstandshalters an der Antriebsklinke, für die Antriebsklinke ist die Einstellung des Axialwegs zwischen Antriebsklinke und Ritzel unabhängig von der Bewegung des Hebelsystems, wie etwa einer Tellerfeder oder einer Hebelfeder. Die Kontaktfläche am Verstellring stellt dabei einen über die Lebensdauer konstanten Bezugspunkt dar, von dem sich die Anpressplatte mit zunehmender Anzahl von Nachstellvorgängen axial wegbewegt. Die Abhubbewegungen des Hebelsystems sind für die Kontaktfläche an dem Verstellring ohne Einfluss. Weiterhin sind der Verstellring und damit auch die an diesem angeordnete Kontaktfläche gegenüber Schwingungen unempfindlich. Um Zerstörungen oder Beschädigungen der Kontaktfläche, der Abstandshalter oder den Gegenanschlag der Kontaktfläche bildende Bauteile, die zu einer Fehlfunktion der Nachstelleinrichtung führen können, zu vermeiden, kann die Kontaktfläche axial elastisch ausgeführt sein. Hierzu kann die Antriebsklinke, nach Erreichen der Kontaktfläche durch den Abstandshalter, gemeinsam mit dem Ritzel axial gegenüber dem Gehäuse entgegen der Wirkung einer Vorspannfeder verlagert werden. Hierzu kann die Vorspannfeder als einseitig außerhalb des Gehäuses befestigte und axial gegen das Gehäuse vorgespannte Blattfeder ausgebildet sein. An der Vorspannfeder können die Antriebsklinke und der Abstandshalter befestigt sein, die jeweils das Gehäuse axial durchgreifen können.

Die an dem Verstellring angeordnete Kontaktfläche kann direkt auf der der Anpressplatte entgegengesetzten Oberfläche dessen in der als Bodenvertiefung ausgestalteten Aussparung gebildet sein. Alternativ kann die Kontaktfläche durch Materialauftrag oder Befestigung eines entsprechenden Materialstücks, wie eines Blechstücks, beispielsweise durch Nieten, Schrauben oder Schweißen in der Aussparung erfolgen. Dabei ist der Boden stets die oberste Oberfläche in der Aussparung.

Bedingt durch die ritzelseitige Anordnung der Antriebsklinke und des Abstandshalters, wie etwa eines Abstandsbleches, sollte in radialer Richtung der Kupplungsvorrichtung zweckmäßigerweise ausreichend Bauraum vorhanden sein, um eine gewünschte Funktionalität sicherzustellen. In Abhängigkeit des Einbauortes der Reibungskupplung und der damit einhergehenden möglichst klein dimensionierten Ausgestaltung des Gehäuses kann dieser Bauraum jedoch begrenzt sein. Der Abstandshalter verläuft deshalb erfindungsgemäß durch eine als Durchgang ausgestaltete Aussparung des Hebelsystems zu einer Anlage an der Kontaktfläche. Je nach Betriebszustand verläuft der Abstandshalter von dem Bereich des Gehäuses durch die Aussparung und kommt zu einer Anlage an der Kontaktfläche. Folglich weist der Abstandshalter einen Abstand zum Drehzentrum der Kupplungsvorrichtung auf, der kleiner sein kann als der Radius des Hebelsystems, beispielsweise einer Tellerfeder, deren Kraftrand zumindest teilweise auf der der Anpressplatte abgewandten Oberfläche des Verstellrings aufliegt. Der antriebsklinkenseitige Abstandshalter kann somit radial weiter nach innen verlagert werden, als aus dem Stand der Technik bekannt, wodurch in radialer Richtung der Reibungskupplung ein vergrößertes Platzangebot zwischen der Antriebsklinke und dem Antriebsmittel ermöglicht wird. Das Hebelsystem kann in dem Bereich des Abstandshalters eine Aussparung aufweisen, die als Durchgang für den Abstandshalter ausgestaltet ist, so dass der Abstandshalter mit der der Anpressplatte abgewandten Oberfläche des Verstellrings beziehungsweise dessen Kontaktfläche in Anlage kommen kann. Dabei die kann Aussparung derart ausgestaltet sein, dass der Abstandshalter im Wesentlichen senkrecht zu dem Hebelsystem verläuft.

Der Abstandshalter liegt nicht auf einem separat an dem Verstellring angeordneten und fixierten Element an, sondern kommt unmittelbar mit dem Verstellring -(nocken) beziehungsweise der an seiner der Anpressplatte entgegengesetzten Oberfläche angeordneten Kontaktfläche in Anlage. Dadurch kann die erfindungsgemäße Reibungskupplung mit weggesteuerter Verschleißkompensation derart optimiert werden, dass mehr Platz zwischen Antriebsklinke und Ritzel entsteht, so dass Problemen bezüglich kleinen Bauraummöglichkeiten wirksam begegnet werden kann. Ferner ist die erfindungsgemäße Reibungskupplung einfacher in der Herstellung, da auf das Herstellen und die Montage eines zusätzlichen Bauteils, der Anlage für den Abstandshalter beziehungsweise das Abstandsblech aus dem Stand der Technik, verzichtet werden kann. Darüber hinaus sind erfindungsgemäß Vorteile mit Bezug auf Steifigkeit und damit Stabilität erzielbar.

In einer bevorzugten Ausführungsform ist die Kontaktfläche des Verstellrings entlang des Verstellweges des Verstellringes rampenförmig ausgebildet. Die Kontaktfläche des Verstellringes kann dabei in Abhängigkeit von einer Änderung der effektive Zahnweite ausgebildet sein, wobei die Änderung der effektiven Zahnweite über den Verschleißbereich konstruktiv ermittelbar ist, wodurch der Anschlag um eine vorgegebene Kompensation ergänzt werden kann. Dadurch kann insbesondere mittels einer rampenförmigen Kontaktfläche beispielsweise eine kleiner werdende Zahnweite durch einen ebenfalls kleiner werdenden Abstand kompensiert werden, wodurch eine im Wesentlichen lineare Verschleißnachstellung gewährleistet werden kann. Die Kontaktfläche kann entlang der Kontaktfläche, zumindest entlang eines Teilbereiches der Kontaktfläche, beispielsweise von einem Ende der Kontaktfläche zu dem anderen Ende der Kontaktfläche, rampenförmig ansteigen oder abfallen. Die Steigung der Kontaktfläche kann linear sein, oder beispielsweise einer Funktion folgen. Ferner kann die Steigung über die gesamte Kontaktfläche verlaufen, also insbesondere von einer Wandung der Aussparung zu der gegenüberliegenden Wandung der Aussparung verlaufen.

Die exakte Ausgestaltung einer positiven oder einer negativen Steigung sowie deren Stärke kann in Abhängigkeit der gewünschten Einstellbarkeit gewählt werden. Etwa kann ein Ausgleich von Kraftänderungen, die ermittelbar sein kann über die Steifigkeit des Federelements und die eine insbesondere lineare Kontur ergibt, durch eine Ausgestaltung der Kontaktfläche möglich sein. Beispielsweise kann die Kontaktfläche derart ausgebildet sein, dass ein auftretender Anpresskraftverlust, also ein Verlust oder eine Verringerung der Anpresskraft durch eine entsprechend ausgebildete Kontaktfläche des Verstellrings, kompensierbar ist. Zu einem Verlust oder einer Verringerung der Anpresskraft, beispielsweise der Antriebsklinke, kann es in Folge einer zunehmenden Blattfederkraft kommen. In diesem Fall kann die Rampe eine negative Steigung entlang des Verstellweges des Verstellringes aufweisen. Folglich kann mit zunehmender Zustellung des Verstellrings die wirksame Höhe der Rampe beziehungsweise der durch die Rampe gebildeten Freiform zunehmen. Weiterhin bevorzugt kann die Kontaktfläche derart ausgebildet sein, dass auftretende Setzverluste kompensierbar sind, welche insbesondere am Verschleißbereichsanfang nach der Montage durch plastische Verformungen auftreten können, wobei eine positive Steigung entlang des Verstellweges des Verstellringes zweckmäßig sein. Folglich kann mit zunehmender Zustellung des Verstellrings die wirksame Höhe der Rampe beziehungsweise der durch die Rampe gebildeten Freiform abnehmen. Dabei kann ferner die entsprechende gesamtheitliche Rampe beziehungsweise Freiform durch eine Superpositionierung der einzelnen Teilrampenrampen, die in geeigneter Weise den gewünschten Effekt kompensieren, realisiert werden, die auf die Kontaktfläche aufgebracht werden. Dadurch kann die Genauigkeit der Verschleißnachstellung verbessert werden. Ferner ist in dieser Ausführungsform in besonders vorteilhafter Weise bei einer kompakten Bauform eine gezielte Betriebspunktanpassung ohne Einsatz eines zusätzlichen Bauteils möglich.

In einer weiteren bevorzugten Ausführungsform ist der Abstandshalter bolzenförmig ausgestaltet. Der bolzenförmige Abstandshalter kann dabei etwa an der Antriebsklinke befestigt sein. Durch einen bolzenförmigen Abstandshalter kann eine besonders große Steifigkeit und damit Stabilität erreicht werden, wobei der Abstandshalter in dieser Ausführungsform in hoher Stabilität ferner besonders kompakt ausbildbar ist und so den benötigten Raumbedarf noch weiter reduziert. Ein bolzenförmiger Abstandshalter soll dabei insbesondere ein stiftförmiger Abstandshalter sein, also insbesondere einen kreisförmigen Querschnitt aufweisen. Der kreisförmige Querschnitt kann dabei eine große Auflagefläche zu der Kontaktfläche ausbilden. Für den Fall der Ausgestaltung einer rampenförmigen Kontaktfläche entlang des Verstellweges des Verstellringes etwa kann die der Kontaktfläche zugewandte Oberfläche des Abstandshalters in seiner Form an die Kontaktfläche angepasst sein, also etwa ebenfalls rampenförmig ausgestaltet sein, wobei die Rampe zu der Rampe der Kontaktfläche komplementär sein kann.

Es kann weiterhin vorteilhaft sein, wenn der Abstandshalter mit der Antriebsklinke einstückig ausgebildet ist. Dabei kann der Abstandshalter in seiner Form im Wesentlichen frei wählbar sein. Beispielsweise kann der Abstandshalter bolzenförmig oder als Abstandsblech ausgebildet sein. In dieser Ausgestaltung kann bei minimalem Raumbedarf eine besonders einfache Herstellbarkeit realisiert werden, da der Abstandshalter kein eigenes Bauteil umfassen braucht sondern als Teil der Antriebsklinke bei der Herstellung und Installierung letzter hergestellt und installiert werden kann. Die erfindungsgemäße Reibkupplung ist so besonders einfach ausbildbar.

In einer weiteren vorteilhaften Ausgestaltung verläuft der Abstandshalter im Wesentlichen parallel zu einer Drehachse der Reibungskupplung und weist gegenüber dieser einen Abstand auf, der im Wesentlichen dem Radius des Verstellrings entspricht. Dadurch kann in besonders einfacher Weise ohne eine aufwändige konstruktive Verformung beziehungsweise Formgebung des Abstandhalters eine Anlage des Abstandhalters mit dem Verstellring beziehungsweise dessen Kontaktfläche realisiert werden. Darüber hinaus kann die radiale Ausdehnung der in dem Hebelsystem angeordneten und als Durchgang ausgestalteten Aussparung gering gehalten werden, wobei das Hebelsystem radial in der Position des Verstellringes abschließen kann. Die in dem Hebelsystem angeordnete Aussparung kann daher eine radiale Ausdehnung aufweisen, die im Wesentlichen der radialen Ausdehnung des Abstandshalters entspricht und ferner eine tangentiale Ausdehnung aufweisen, die im Wesentlichen der Länge der Kontaktfläche des Verstellrings entlang des Verstellweges des Verstellringes entspricht. Die Stabilität sowie die Funktionalität des Hebelsystems wird dadurch nicht negativ beeinflusst.

Die Erfindung betrifft ferner einen Antriebsstrang für ein Kraftfahrzeug mit einer Reibungskupplung, die wie vorstehend beschrieben aus- und weitergebildet sein kann. Durch die erfindungsgemäße Ausgestaltung der Reibungskupplung kann die Genauigkeit der Verschleißnachstellung bei einer Minimierung des erforderlichen radialen Bauraums verbessert werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können.

Es zeigen:
- Fig. 1: eine schematische Schnittansicht durch eine Reibungskupplung mit einer weggesteuerten Verschleißkompensation nach dem Stand der Technik;
- Fig. 2: eine schematische Schnittansicht der Anordnung des Abstandshalters gemäß einer Ausführungsform der Erfindung;
- Fig. 3: einen schematische Schnittansicht einer in einem Verstellring angeordneten Kontaktfläche mit einer Freiform;
- Fig. 4: eine schamtische Darstellung einer Ausgestaltung der Freiform.

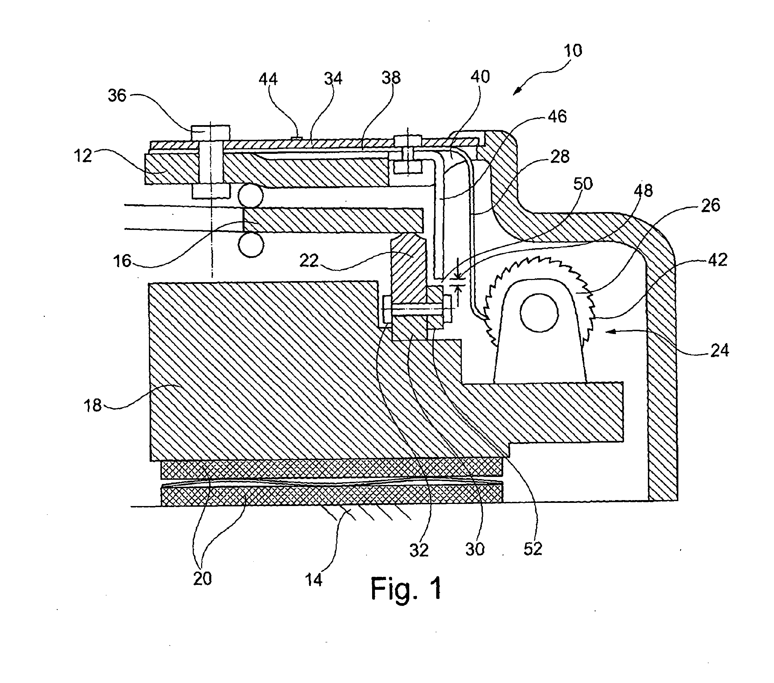

Die in Fig. 1 gezeigte Reibungskupplung 10 gemäß dem Stand der Technik, die etwa in einem Antriebsstrang angeordnet sein kann, weist ein Gehäuse 12 und eine fest an diesem aufgenommene, nur angedeutete Gegendruckplatte 14 auf, gegen die die von einem Hebelsystem 16 wie etwa einer Tellerfeder axial verlagerbare, und drehfest mit dem Gehäuse 12 verbundene Anpressplatte 18 unter Bildung eines Reibschlusses mit Reibbelägen 20 einer (nicht dargestellten) Kupplungsscheibe verspannbar ist. Zur Kompensation von axialem Verschleiß der Reibbeläge 20 ist zwischen dem Hebelsystem 16 und der Anpressplatte 18 ein Verstellring 22 angeordnet, der bei erkanntem Verschleiß von einem Spindeltrieb 24 verdreht wird. Hierzu wird im Verschleißzustand zwischen einem mit einer Spindel des Spindeltriebs 24 verbundenen Ritzel 26 und der an dem Gehäuse 12 aufgenommenen Antriebsklinke 28 ein Formschluss hergestellt, wenn sich infolge des Verschleißes ein verlängerter Weg der Anpressplatte 18 gegenüber dem Gehäuse 12 ergibt. Bei einer Rückbewegung der Anpressplatte 18, beispielsweise zum öffnen der Reibungskupplung 10, wird das Ritzel 26 und damit über den Spindeltrieb 24 der Verstellring 22 mit seinen in Umfangsrichtung angeordneten und an den komplementär zu diesen ausgebildeten Gegenrampen 30 der Anpressplatte 18 anliegenden Rampen 32 verdreht und der durch den Verschleiß der Reibbeläge 20 verringerte Abstand zwischen Hebelsystem 16 und Gegendruckplatte 14 verringert. Die Antriebsklinke 28 ist außerhalb des Gehäuses 12 befestigt, wobei ein Befestigungsteil 34 der Antriebsklinke 28 radial ausgerichtet und radial innen mittels eines Blindniets 36 an dem Gehäuse 12 befestigt ist. Ein Antriebsteil 38 ist an dem freien Ende des Befestigungsteils 34 axial umgelegt und durchgreift das Gehäuse 12 durch ein Fenster 40. Im Normalbetrieb ist die Antriebsklinke 28 gegen ein Außenprofil 42, beispielsweise eine Außenverzahnung, des Ritzels 26 radial vorgespannt und gleitet auf diesem während den Betätigungsvorgängen der Reibungskupplung 10, also bei axialer Verlagerung der Anpressplatte 18. Bei einer Erhöhung des axialen Wegs der Anpressplatte 18 im Verschleißzustand rastet die Antriebsklinke 28 formschlüssig in das Außenprofil 42 bei geschlossener Reibungskupplung 10 ein und nimmt beim öffnen der Reibungskupplung 10 das Ritzel 26 mit. Anschließend gleitet die Antriebsklinke 28 wieder aus dem Außenprofil 42 und ein Nachstellzyklus ist abgeschlossen.

Um den Weg der Antriebsklinke 28 zu begrenzen, um beispielsweise eine schrittweise Nachstellung vorzugeben oder beispielsweise ein klemmendes Ritzel 26 vor Beschädigung zu schützen, ist die Antriebsklinke 28 gegenüber dem Gehäuse 12 axial elastisch aufgenommen. Hierzu ist über das Befestigungsteil 34 der Antriebsklinke 28 eine Vorspannfeder 44 gelegt und zusammen mit dem Befestigungsteil 34 mittels des Blindniets 36 einseitig am Gehäuse 12 befestigt. Die Vorspannfeder 44 wird mittels des Abstandshalters 46, gemäß Figur 1 als Abstandsblech ausgestaltet, dann gegen ihre Vorspannung gegen die Antriebsklinke 28 verlagert, wenn der Axialweg 48, der zumindest einer Teilung des Außenprofils 42 entsprechen kann, zwischen einem direkt an dem Verstellring 22 befestigten Axialanschlag 50 und dem Abstandshalter 46 aufgebraucht ist. Dabei verlagert sich bei einer Abhubbewegung der Anpressplatte 18 von der Gegendruckplatte 14 nach Aufbrauch des Axialwegs 48 die Antriebsklinke 28 mit dem Ritzel 26. Der Axialanschlag 50 ist aus dem mit dem Verstellring 22 verbundenen Anschlagteil 52 gebildet, welches beispielsweise mit dem Verstellring 22 vernietet, verschweißt oder verklebt oder aus diesem einstückig gebildet sein kann.

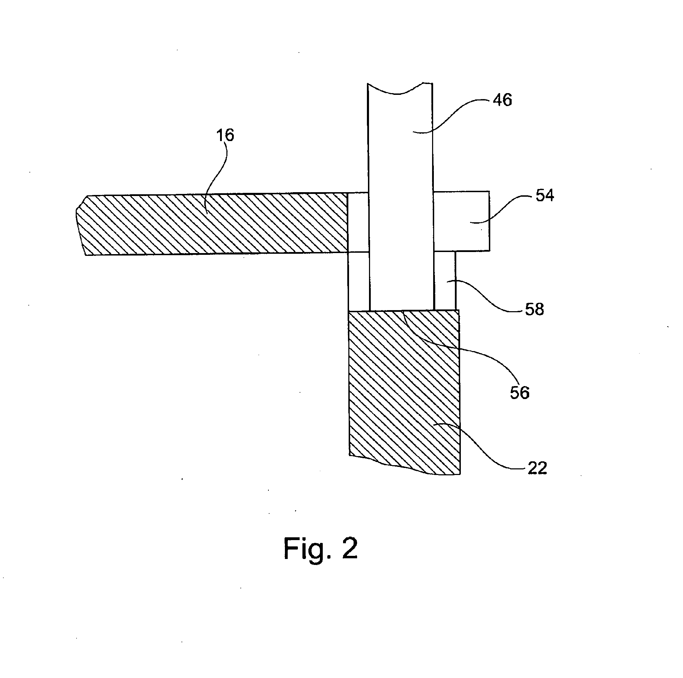

Figur 2 zeigt eine Ausführungsform einer erfindungsgemäßen Abwandlung bezogen auf den Stand der Technik gemäß Figur 1. Dabei zeigt Figur 2 zur Vereinfachung nur das Hebelelement 16, den Verstellring 22 sowie den beispielsweise bolzenförmig ausgestalteten Abstandshalter 46. Neben der Anordnung dieser Elemente kann die erfindungsgemäße Reibungskupplung 10 wie in Figur 1 beschrieben aus- und weitergebildet sein. Die Reibungskupplung 10 gemäß der vorliegenden Erfindung unterscheidet sich von der in Figur 1 gezeigten Reibungskupplung 10 im Wesentlichen dadurch, dass der Abstandshalter 46 nicht axial außerhalb des Hebelelements 16 und des Verstellrings 22 verläuft und auf einem radial außerhalb des Verstellrings 22 angeordneten Axialanschlag 50 zur Anlage kommt, sondern durch eine in dem Hebelelement 16 an seinem radial äußeren Ende angeordneten und als Durchgang ausgestaltete Aussparung 54 verläuft. Es kann so eine direkte Auflage des Abstandshalters 46 auf dem Verstellring 22 beziehungsweise auf einer Kontaktfläche 56, die als Boden einer in einer der Anpressplatte 18 entgegengesetzt angeordneten Oberfläche des Verstellrings 22 angeordneten, als Bodenvertiefung ausgestalteten Aussparung 58 ausgebildet ist. Der Abstandshalter 46 kann mit der Antriebsklinke 28 einstückig ausgebildet sein. Ferner kann der Abstandshalter 46 im Wesentlichen parallel zu einer Drehachse der Reibungskupplung 10 verlaufen und gegenüber dieser einen Abstand aufweisen, der im Wesentlichen dem Radius des Verstellrings 22 entspricht.

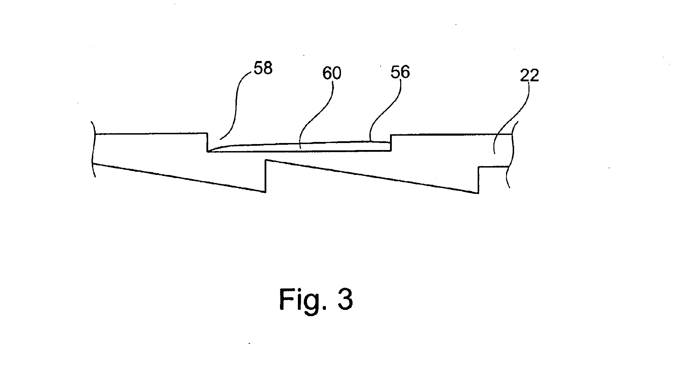

In Fig. 3 ist ausschnittsweise der Verstellring 22 gezeigt, an dessen der Anpressplatte 18 entgegengesetzten Oberfläche die als Bodenvertiefung ausgestalteten Aussparung 58 ausgebildet ist. Um etwa eine gezielte Betriebspunktanpassung ohne Einsatz eines zusätzlichen Bauteils zu ermöglichen, ist die Kontaktfläche 56, beziehungsweise der Boden der Aussparung 58 nicht mehr eben ausgebildet, sondern die Kontaktfläche 56 des Verstellrings 22 ist entlang des Verstellweges des Verstellringes 22 rampenförmig ausgebildet ist. Eine rampenförmige Ausgestaltung kann etwa durch eine Freiform 60 realisiert werden, die in der Aussparung aufgebracht wird. Ferner ist eine rampenförmige Ausgestaltung 58 direkt durch die Herstellung der Aussparung realisierbar.

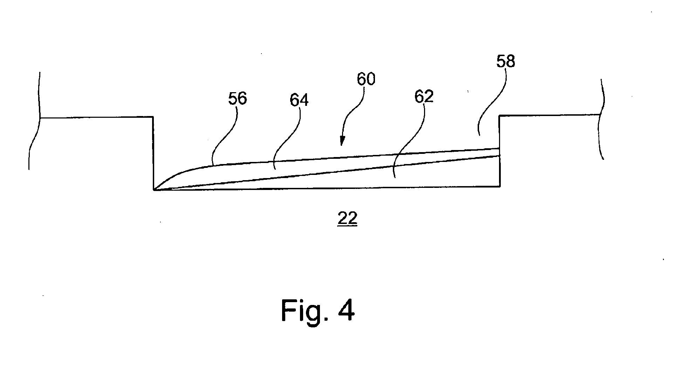

Figur 4 zeigt ferner eine Möglichkeit zur Ausgestaltung der Freiform 60 beziehungsweise zur Ausgestaltung der Rampe. Die Freiform 60 kann etwa zwei Teilbereich 62, 64 aufweisen, von denen der erste Teilbereich 62 einer zusätzlichen Kompensation für einen Anpresskraftverlust durch Blattfederkraftanstieg dient und eine entsprechende Rampenform aufweist, wobei der zweite Teilbereich 64 einer zusätzlichen Kompensation von Setzverlusten dient und ebenfalls eine entsprechende Rampenform aufweist. Durch eine Superposition der beiden Teilbereiche 62, 64 entsteht die Gesamt-Freiform 60. Dabei ist verständlich, dass nicht zwingend zwei Teilbereiche 62, 64 in der Aussparung vorgesehen sein müssen. Vielmehr wird aus dem Vorstehenden deutlich, dass insbesondere die Form der Profilierung der Kontaktfläche 56 von Bedeutung ist. So kann die Ausgestaltung der Profilierung der Kontaktfläche unter anderem realisiert werden durch das Aufbringen einer Freiform 60 aufweisend die resultierende Oberflächenstruktur oder durch das entsprechende Herstellen der Aussparung 58.

### Bezugszeichenliste

- 10: Reibungskupplung
- 12: Gehäuse
- 14: Gegendruckplatte
- 16: Hebelsystem
- 18: Anpressplatte
- 20: Reibbelag
- 22: Verstellring
- 24: Spindeltrieb
- 26: Ritzel
- 28: Antriebsklinke
- 30: Gegenrampe
- 32: Rampe
- 34: Befestigungsteil
- 36: Blindniet
- 38: Antriebsteil
- 40: Fenster
- 42: Außenprofil
- 44: Vorspannfeder
- 46: Abstandshalter
- 48: Axialweg
- 50: Axialanschlag
- 52: Anschlagteil
- 54: Aussparung
- 56: Kontaktfläche
- 58: Aussparung
- 60: Freiform
- 62: Teilbereich
- 64: Teilbereich

## Patentansprüche

1. Reibungskupplung (10) mit einem Gehäuse (12) mit einer drehfest und axial begrenzt zu diesem verlagerbar angeordneten Anpressplatte (18), die von einem sich an dem Gehäuse (12) abstützenden Hebelsystem (16) gegenüber einer gehäusefest angeordneten Gegendruckplatte (14) unter Verspannung von Reibbelägen (20) einer Kupplungsscheibe axial verlagerbar ist, wobei bei Unterschreiten eines bei verspannten Reibbelägen (20) gebildeten Abstands zwischen Anpressplatte (18) und Gegendruckplatte (14) ein Formschluss zwischen einem mit einer Spindel eines an der Anpressplatte (18) angeordneten Spindeltriebs (24) zum Drehantrieb eines zwischen Anpressplatte (18) und Hebelsystem (16) angeordneten Verstellrings (22) verbundenen Ritzel (26) und einer an dem Gehäuse (12) elastisch unter Vorspannung in Richtung Anpressplatte (18) befestigten Antriebsklinke (28) gebildet wird und während einer Betätigungsbewegung der Anpressplatte (18) gegenüber dem Gehäuse (12) nach einem Verdrehen des Ritzels (26) mittels der Antriebsklinke (28) gelöst wird, wobei ein Axialweg (48) der Antriebsklinke (28) gegenüber dem Ritzel (26) mittels des Verstellrings (22) mit einer Kontaktfläche (56) und eines gehäuseseitig angeordneten Abstandshalters (46) begrenzt ist, **dadurch gekennzeichnet, dass** die Kontaktfläche (56) über einen im Wesentlichen axialen Verstellweg des Verstellringes (22) durch den Abstandshalter (46) kontaktierbar ist, wobei der Abstandshalter (46) durch eine als Durchgang ausgestaltete Aussparung (54) des Hebelsystems (16) zu einer Anlage an der Kontaktfläche (56) verläuft, wobei die Kontaktfläche (56) als Boden einer, in einer der Anpressplatte (18) entgegengesetzt angeordneten Oberfläche des Verstellrings (22) angeordneten, als Bodenvertiefung ausgestalteten Aussparung (58) ausgebildet ist.

2. Reibungskupplung nach Anspruch 1, **dadurch gekennzeichnet, dass** die Kontaktfläche (56) des Verstellrings (22) entlang des Verstellweges des Verstellringes (22) rampenförmig ausgebildet ist.

3. Reibungskupplung nach Anspruch 1 oder 2, **dadurch gekennzeichnet, dass** der Abstandshalter (46) bolzenförmig ausgestaltet ist.

4. Reibungskupplung nach einem der vorherigen Ansprüche, **dadurch gekennzeichnet, dass** der Abstandshalter (46) mit der Antriebsklinke (28) einstückig ausgebildet ist.

5. Reibungskupplung nach einem der vorherigen Ansprüche, **dadurch gekennzeichnet, dass** der Abstandshalter (46) im Wesentlichen parallel zu einer Drehachse der Reibungskupplung (10) verläuft und gegenüber dieser einen Abstand aufweist, der im Wesentlichen dem Radius des Verstellrings (22) entspricht.

6. Antriebsstrang mit wenigstens einer Reibungskupplung (10) nach einem der Ansprüche 1 bis 5.

## Claims

1. Friction clutch (10) having a housing (12) with a pressure plate (18) which is arranged such that it can be displaced in a rotationally fixed and axially limited manner with respect to the said housing (12), which pressure plate (18) can be displaced axially by a lever system (16), which is supported on the housing (12), with respect to a counterpressure plate (14) which is arranged fixedly on the housing, with clamping of friction linings (20) of a clutch plate, wherein, if a spacing which is formed in the case of clamped friction linings (20) between the pressure plate (18) and the counterpressure plate (14), is undershot, a positively locking connection is formed between a pinion (26), which is connected to a spindle of a spindle drive (24) arranged on the pressure plate (18) for rotary driving of an adjusting ring (22) which is arranged between the pressure plate (18) and the lever system (16), and a drive pawl (28) which is fastened to the housing (12) elastically under prestress in the direction of the pressure plate (18), and the said positively locking connection is released during an actuating movement of the pressure plate (18) with respect to the housing (12) after a rotation of the pinion (26) by means of the drive pawl (28), wherein an axial travel (48) of the drive pawl (28) with respect to the pinion (26) is delimited by means of the adjusting ring (22) with a contact face (56) and a spacer element (46) which is arranged on the housing side, **characterized in that** the contact face (56) can be contacted by the spacer element (46) over a substantially axial adjusting travel of the adjusting ring (22), wherein the spacer element (46) runs through a recess (54) of the lever system (16), which recess (54) is configured as a passage, to a contact on the contact face (56), wherein the contact face (56) is configured as a bottom of a recess (58) which is configured as a bottom depression and is arranged in a surface of the adjusting ring (22), which surface is arranged in an opposed manner with respect to the pressure plate (18).

2. Friction clutch according to Claim 1, **characterized in that** the contact face (56) of the adjusting ring (22) is of ramp-shaped configuration along the adjusting travel of the adjusting ring (22).

3. Friction clutch according to Claim 1 or 2, **characterized in that** the spacer element (46) is of pin-shaped configuration.

4. Friction clutch according to one of the preceding claims, **characterized in that** the spacer element (46) is configured in one piece with the drive pawl (28).

5. Friction clutch according to one of the preceding claims, **characterized in that** the spacer element (46) runs substantially parallel to a rotational axis of the friction clutch (10) and is at a spacing from the latter which corresponds substantially to the radius of the adjusting ring (22).

6. Drive train having at least one friction clutch (10) according to one of Claims 1 to 5.

## Revendications

1. Embrayage à friction (10) avec un boîtier (12) avec une plaque de pression (18) disposée de façon calée en rotation et déplaçable axialement de façon limitée par rapport à celui-ci, qui est déplaçable axialement par un système de levier (16) prenant appui sur le boîtier (12) par rapport à une plaque de contre-pression (14) disposée solidairement au boîtier avec serrage de garnitures de friction (20) d'un disque d'embrayage, dans lequel, en cas de descente sous une distance entre la plaque de pression (18) et la plaque de contre-pression (14) formée lorsque les garnitures de friction (20) sont serrées, une liaison par emboîtement se forme entre un pignon (26) relié à une broche d'un entraînement à broche (24) disposé sur la plaque de pression (18) pour l'entraînement en rotation d'une bague de réglage (22) disposée entre la plaque de pression (18) et le système de levier (16) et un cliquet d'entraînement (28) fixé au boîtier (12) de façon élastique avec précontrainte en direction de la plaque de pression (18) et se rompt pendant un mouvement d'actionnement de la plaque de pression (18) par rapport au boîtier (12) après une rotation du pignon (26) au moyen du cliquet d'entraînement (28), dans lequel une course axiale (48) du cliquet d'entraînement (28) par rapport au pignon (26) est limitée au moyen de la bague de réglage (22) avec une face de contact (56) et d'une pièce d'écartement (46) disposée du côté du boîtier, **caractérisé en ce que** la face de contact (56) peut être contactée par une course de réglage essentiellement axiale de la bague de réglage (22) par la pièce d'écartement (46), dans lequel la pièce d'écartement (46) s'étend à travers une découpe en forme de passage (54) du système de levier (16) jusqu'à un appui sur la face de contact (56), dans lequel la face de contact (56) est réalisée sous la forme du fond d'une découpe (58) en forme de creux de fond disposée dans une surface de la bague de réglage (22) disposée à l'opposé de la plaque de pression (18).

2. Embrayage à friction selon la revendication 1, **caractérisé en ce que** la face de contact (56) de la bague de réglage (22) est réalisée en forme de rampe le long de la course de réglage de la bague de réglage (22).

3. Embrayage à friction selon la revendication 1 ou 2, **caractérisé en ce que** la pièce d'écartement (46) est réalisée en forme de boulon.

4. Embrayage à friction selon l'une quelconque des revendications précédentes, **caractérisé en ce que** la pièce d'écartement (46) est réalisée en une seule pièce avec le cliquet d'entraînement (28).

5. Embrayage à friction selon l'une quelconque des revendications précédentes, **caractérisé en ce que** la pièce d'écartement (46) est essentiellement parallèle à un axe de rotation de l'embrayage à friction (10) et présente par rapport à celui-ci une distance, qui correspond essentiellement au rayon de la bague de réglage (22).

6. Chaîne cinématique avec au moins un embrayage à friction (10) selon l'une quelconque des revendications 1 à 5.
